# EUROPÄISCHE PATENTSCHRIFT

(11) **EP 2 865 087 B1**
(45) Veröffentlichungstag und Bekanntmachung des Hinweises auf die Patenterteilung: **15.03.2017**
(21) Anmeldenummer: 13731078.5
(22) Anmeldetag: 17.06.2013
(51) Int. Cl.: H02M 7/797

(54) **PARALLELE WECHSELRICHTER AN EINER DROSSEL**
PARALLEL INVERTERS WITH INDUCTOR
ONDULEURS PARALLÈLES AVEC INDUCTANCE

(30) Priorität: 26.06.2012 DE 102012105583
(43) Veröffentlichungstag der Anmeldung: 29.04.2015
(73) Patentinhaber: SMA Solar Technology AG, 34266 Niestetal (DE)
(72) Erfinder: KNOKE, Raphael, 33184 Altenbeken (DE); SCHNEIDER, Henning, 63679 Schotten (DE); SCHULZE, Gerold, 34121 Kassel (DE)
(74) Vertreter: Lahnor, Peter
(86) Internationale Anmeldenummer: PCT/EP2013/062497
(87) Internationale Veröffentlichungsnummer: WO 2014/001116

(56) Entgegenhaltungen:
- EP-A1- 2 104 115
- FR-A1- 2 875 971

## Beschreibung

Die Erfindung betrifft eine Drosseleinrichtung nach dem Oberbegriff des Patentanspruchs 1 und eine eine solche Drosseleinrichtung umfassende Vorrichtung, mit der elektrischer Strom von mindestens einer Gleichstromquelle über mehrere Wechselrichter in ein Wechselstromnetz einspeisbar ist.

Insbesondere beim Vorliegen hoher oder auch unterschiedlich großer Gleichströme, die von der mindestens einen Gleichstromquelle in das Wechselstromnetz einzuspeisen sind, ist es vorteilhaft, statt nur eines Wechselrichters mehrere elektrisch parallel geschaltete und einzeln abschaltbare Wechselrichter einzusetzen, die den Gleichstrom in einen Wechselstrom umwandeln, um ihn in das Wechselstromnetz einzuspeisen. Dabei weist jeder Wechselrichter für jede Phase des Wechselstromnetzes einen Ausgang auf; und die jeweils derselben Phase des Wechselstromnetzes zugeordneten Ausgänge der verschiedenen Wechselrichter sind über Drosseln mit einem Phasenanschluss elektrisch leitend verbunden.

Die Gleichstromquelle kann beispielsweise ein Photovoltaikgenerator sein, dessen Gleichstrom von den elektrisch parallel geschalteten Wechselrichtern in einen dreiphasigen Wechselstrom umgewandelt wird. Den drei Phasen entsprechend weist die Vorrichtung dann drei Phasenanschlüsse auf.

### STAND DER TECHNIK

Aus der DE 41 11 734 C1 ist ein Verfahren bekannt, bei dem mehrere Wechselrichter parallel geschaltet sind, um Strom von mindestens einer Gleichstromquelle in ein Wechselstromnetz einzuspeisen. Die Wechselrichter weisen hierbei für jede Phase des Wechselstromnetzes einen Ausgang auf, wobei die Ausgänge verschiedener Wechselrichter, die zu einer Phase des Wechselstroms gehören, über Entkopplungsdrosseln mit einem Phasenanschluss für die entsprechende Phase des Wechselstroms verbunden sind. Um einen Querstrom zu minimieren, der zwischen den Wechselrichtern auftreten kann, wenn diese ein unterschiedliches Schaltverhalten aufweisen, wird ein Potentialstellbefehl an einen von zwei Wechselrichtersträngen, zwischen denen ein Querstrom auftritt, vorübergehend umgekehrt. Dazu werden die von den beiden Wechselrichtersträngen fließenden Ströme über einen Komparator verglichen, von dem bei Überschreiten eines Grenzwerts die Umkehrung des Potentialstellbefehls ausgelöst wird. Diese Umkehrung wird erst dann wieder aufgehoben, wenn der Querstrom wieder unter den Grenzwert gefallen ist.

Es ist üblich, zwischen einem gemeinsamen Phasenanschluss, mit dem mehrere Wechselrichter über Entkopplungsdrosseln verbunden sind, und der zugehörigen Phase eines Wechselstromnetzes eine Netzfilterdrossel vorzusehen.

Aus der US 2010/0165678 A1 ist eine Anordnung zum Umwandeln eines Gleichstroms in einen mehrphasigen Wechselstrom bekannt, wobei die Anordnung eine Mehrzahl von Wechselrichtern aufweist. Jeder der Wechselrichter weist für jede der Phasen des Wechselstroms einen Ausgang auf, wobei die Ausgänge der Wechselrichter, die den gleichen der Phasen zugeordnet sind, jeweils mit einem Phasenanschluss verbunden sind. Um Querströme zwischen den Wechselrichtern zu unterbinden, ist zwischen jedem Ausgang und einem Zwischenpunkt eine erste Drossel mit einer Drosselwicklung auf einem magnetischen Kern vorgesehen. Zwischen diesem Zwischenpunkt und dem zugehörigen Phasenanschluss ist eine zweite Drossel mit einer Drosselwicklung auf demselben magnetischen Kern wie eine Drosselwicklung einer ersten Drossel eines derselben Phase zugeordneten anderen Wechselrichters vorgesehen. Die Kerne, auf denen die Drosselwicklungen der den verschiedenen Phasen zugeordneten ersten Drosseln jedes Wechselrichters angeordnet sind, sind untereinander magnetisch gekoppelt, d. h. parallele Stege eines EE-Kerns.

Aus der DE 10 2007 063 434 A1 ist ein Wechselrichtersystem mit einer Mehrzahl von elektrisch parallel geschalteten Wechselrichtern bekannt, die für jede Phase eines an eine Last ausgegebenen Wechselstroms einen Ausgang aufweisen. Für diese Ausgänge ist eine induktive Kopplungseinheit vorhanden, bei der die Ströme einer Phase von allen Wechselrichtern durch eine Drossel gekoppelt sind. Das heißt, die jeweils derselben Phase zugeordneten Ausgänge der Wechselrichter zugeordneten Drosseln sind auf einem gemeinsamen magnetischen Kern angeordnet. Die Kopplungseinheit wirkt als Differentialmodedrossel und dämpft damit nur Kreisströme. Konkret sind die Drosseln, die den Ausgängen der Wechselrichter für dieselbe Phase zugeordnet sind, auf parallelen Stegen jeweils eines Kerns angeordnet.

Aus der EP 2 237 404 A1 ist eine Wechselrichtervorrichtung mit zwei parallel geschalteten Vollbrückenschaltungen bekannt. In den beiden Ausgangsleitungen jeder Vollbrückenschaltung ist eine Filterdrossel für den ausgegebenen Wechselstrom angeordnet. Dabei sind die Filterdrosseln in den beiden zum selben Ausgang der Vorrichtung führenden Leitungen der beiden Vollbrückenschaltungen magnetisch zu einer Doppeldrossel gekoppelt. Die Doppeldrossel umfasst zwei Wicklungen auf einem gemeinsamen Kern, wobei jeweils ein Wicklungsende direkt oder über weitere Filterelemente an einem Wechselstromausgang der Vorrichtung angeschlossen ist, während das andere Wicklungsende mit einem der Ausgänge der beiden Vollbrückenschaltungen verbunden ist.

Aus der DE 293 758 A ist eine Einrichtung zur Kompensation des Leerlaufstroms bei Spulen mit Eisenkern bekannt. Dabei sind um ein Spuleneisen mehrere gegeneinander isolierte Metallbänder derart gelegt, dass sie insgesamt eine Spule von großer Eigenkapazität darstellen. Die Metallbänder sind zusätzlich zu einer Primär- und Sekundärwicklung um das Spuleneisen gewickelt. Das innere Ende jedes Metallbands ist durch einen Z-förmigen Leiter mit dem äußeren Ende des benachbarten Metallbands verbunden, so dass die Metallbänder in Reihe geschaltet sind. Das äußere Ende des ersten und das innere Ende des letzten Metallbands bleiben aber offen.

Aus der EP 2 104 115 A1 ist eine Drosseleinrichtung für Wechselstrom bekannt, bei der drei Paare von Drosselwicklungen auf jeweils einem von drei parallelen Schenkeln eines gemeinsamen magnetischen Grundkörpers angeordnet sind. Die beiden Drosselwicklungen jedes Paars sind die Hälften eines Wickelkörpers auf beiden Seiten eines Mittelabgriffs. Von dem Mittelabgriff aus gesehen sind die beiden Drosselwicklungen jedes Paars in einander entgegengesetzte Richtungen um den jeweiligen Schenkel gewickelt. An die dem Mittelabgriff abgekehrten Anschlüsse der beiden Drosselwicklungen jedes Paars ist der Mittelpunkt einer von sechs Halbbrücken eines Wechselrichters angeschlossen. An dem Mittelabgriff wird eine Phase des mit dem Wechselrichter geformten Wechselstroms ausgegeben.

Dazu, wie der Wickelkörper auf den Schenkeln des magnetischen Grundkörpers angeordnet und ausgebildet sind, äußert sich die EP 2 104 115 A1 nicht.

Aus der FR 2 875 971 A1 ist eine Drosseleinrichtung bekannt, bei der auf drei parallelen Schenkeln eines magnetischen Grundkörpers jeweils zwei Drosselwicklungen unterschiedlicher Windungszahlen nebeneinander angeordnet sind. Von den zwischen den Drosselwicklungen liegenden Anschlusspunkten der Drosselwicklungen aus betrachtet, sind die Drosselwicktungen in einander gegengesetzten Richtungen um den jeweiligen Schenkel gewickelt. Die Drosselwicklungen können auf unterschiedliche Weise mit einander verschaltet werden.

### AUFGABE DER ERFINDUNG

Der Erfindung liegt die Aufgabe zugrunde, eine hinsichtlich ihres Herstellungsaufwands optimierte Drosseleinrichtung und eine eine solche Drosseleinrichtung aufweisende und dadurch ebenfalls optimierte Vorrichtung aufzuzeigen, mit der elektrischer Strom von mindestens einer Gleichstromquelle über mehrere Wechselrichter in ein Wechselstromnetz einspeisbar ist.

### LÖSUNG

Die Aufgabe der Erfindung wird erfindungsgemäß mit einer Drosseleinrichtung mit den Merkmalen des unabhängigen Patentanspruch 1 gelöst. Eine erfindungsgemäße Vorrichtung, mit der elektrischer Strom von mindestens einer Gleichstromquelle über mehrere Wechselrichter in ein Wechselstromnetz einspeisbar ist, ist im Patentanspruch 9 definiert. Weitere erfindungsgemäße Ausgestaltungen sind den abhängigen Patentansprüchen zu entnehmen.

### BESCHREIBUNG DER ERFINDUNG

Die Erfindung betrifft eine Drosseleinrichtung mit mehreren Drosselwicklungen, die auf einem gemeinsamen magnetischen Kern angeordnet und an einem Ende der Drosselwicklungen parallel zueinander mit einem gemeinsamen Anschluss elektrisch leitend verbunden sind. Die Drosselwicklungen sind durch einen auf dem gemeinsamen magnetischen Kern angeordneten einstückigen Wickelkörper ausgebildet, der den gemeinsamen Anschluss der Drosselwicklungen umfasst, wobei die Drosselwicklungen um ihren gemeinsamen Anschluss und den gemeinsamen magnetischen Kern gewickelt sind.

Wenn in den Patentansprüchen zu der Drosseleinrichtung von ersten, zweiten oder dritten Drosselwicklungen, gemeinsamen magnetischen Kernen oder gemeinsamen Anschlüssen die Rede ist, so bedeutet dies keine Rangfolge, sondern dient nur der Unterscheidbarkeit der so bezeichneten Teile.

Weiterhin betrifft die Erfindung eine eine erfindungsgemäße Drosseleinrichtung aufweisende Vorrichtung, mit der elektrischer Strom von mindestens einer Gleichstromquelle in ein Wechselstromnetz einspeisbar ist. Die erfindungsgemäße Vorrichtung weißt eine Mehrzahl von elektrisch parallel geschalteten Wechselrichtern und für jede Phase des Wechselstromnetzes einen Phasenanschluss auf. Jeder der Wechselrichter weist für jede Phase des Wechselstromnetzes einen Ausgang auf, der über eine eine Drosselwicklung aufweisende Drossel mit dem Phasenanschluss für dieselbe Phase elektrisch leitend verbunden ist. Alle Drosselwicklungen der Drosseln, über die die Ausgänge der Wechselrichter für dieselbe Phase mit dem Phasenanschluss für diese Phase verbunden sind, sind jeweils auf einem gemeinsamen magnetischen Kern angeordnet.

Indem die Drosselwicklungen der Drosseln der Wechselrichter, die den Ausgängen für jeweils dieselbe Phase zugeordnet sind, jeweils auf einem gemeinsamen magnetischen Kern angeordnet sind, besteht zwischen diesen Ausgängen zwar eine elektrische Verbindung, aber eine mittels magnetischer Kopplung der Drosseln erreichte elektrische Entkopplung, durch die die Ausbildung von Querströmen zwischen den Ausgängen unterschiedlicher Wechselrichter minimiert werden. Liegt eine Spannungsdifferenz zwischen zwei demselben Phasenanschluss zugeordneten Ausgängen von zwei Wechselrichtern vor, die beispielsweise aus unterschiedlichen Schaltverhalten der Wechselrichter resultieren kann, führt die magnetische Kopplung der zugehörigen Drosseln dazu, dass nicht nur ihre Induktivitäten, sondern auch ihre Gegeninduktivitäten dem aus der Spannungsdifferenz resultierenden Querstrom entgegenwirken. Dadurch kann schon mit kleiner dimensionierten Drosseln, d. h. Drosseln mit geringerer Induktivität zwischen den Wechselrichtern und dementsprechend geringerer Baugröße, einem Querstrom zwischen zwei Wechselrichtern entgegengewirkt werden, als wenn keine magnetische Kopplung und damit keine zusätzliche Wirkung der Drosseln aufgrund ihrer Gegeninduktivitäten gegeben wäre.

In einer vorteilhaften Ausführungsform der erfindungsgemäßen Vorrichtung bilden die Drosseln, die den Ausgängen für jeweils dieselbe Phase zugeordnet und deren Drosselwicklungen auf dem gemeinsamen magnetischen Kern angeordnet sind, gleichzeitig eine Netzfilterdrossel für den zugehörigen Phasenanschluss. Neben dieser Netzfilterdrossel kann jedem Phasenanschluss eine zusätzliche Netzfilterdrossel zugeordnet sein. In einer besonders kompakten und deshalb bevorzugten Ausführungsform der Vorrichtung weisen die Phasenanschlüsse jedoch keine derartigen zusätzlichen Netzfilterdrosseln auf.

Die Drosselwicklungen, die den Ausgängen für jeweils dieselbe Phase zugeordnet und dementsprechend auf einem gemeinsamen magnetischen Kern angeordnet sind, werden von einem einstückigen Wickelkörper gebildet, der zusätzlich einen gemeinsamen Anschluss aufweist, über den die Drosselwicklungen gemeinsam an den zugehörigen Phasenanschluss angeschlossen sind.

Hierzu kann der Wickelkörper aus separaten Metallbändern für die einzelnen Drosselwicklungen und den gemeinsamen Anschluss gebildet sein, die zur Ausbildung des einstückigen Wickelkörpers verbunden sind. Beispielsweise können die Metallbänder für die Drosselwicklungen zunächst untereinander beabstandet und parallel zueinander sowie quer zu dem Metallband für den gemeinsamen Anschluss angeordnet und dann mit dem gemeinsamen Anschluss elektrisch leitend verbunden werden, bevor sie zu dem Wickelkörper aufgewickelt werden. Die elektrisch leitende Verbindung kann dabei beliebig ausgestaltet sein. Beispielsweise können die Metallbänder für die Drosselwicklungen mit dem Metallband für den gemeinsamen Anschluss verschweißt oder verpresst sein. Um zu verhindern, dass zwischen verschiedenen Drosselwicklungen und/oder innerhalb einer Drosselwicklung ein elektrischer Kontakt und damit ein Kurzschluss auftritt, können die Metallbänder zusätzlich mit einem isolierenden Material beschichtet sein, wobei lediglich Anschlussbereiche zum Anschließen der einzelnen Drosselwicklungen an die Ausgänge der Wechselrichter sowie zum Anschließen des gemeinsamen Anschlusses an den Phasenanschluss zur Herstellung eines elektrischen Kontakts unbeschichtet bleiben können.

In einer konkreten Ausführungsform der erfindungsgemäßen Vorrichtung ist der Wickelkörper für die Drosseln an den Ausgängen der Wechselrichter, die derselben Phase zugeordnet sind, als geschlitztes Blech ausgebildet, wobei sich die Schlitze von einem Ende des Blechs bis kurz vor sein anderes Ende erstrecken, sodass ausgehend von dem einen Ende des Blechs separate Metallbänder für die Drosselwicklungen gebildet sind, die aber an dem anderen Ende durch ein den gemeinsamen Anschluss bildendes, quer verlaufendes Metallband verbunden bleiben. Die Schlitze können auf nahezu beliebige Weise in das Blech eingebracht sein, beispielsweise können sie in das Blech geschnitten oder gestanzt sein. Durch die Schlitze weist das Blech ein kammartiges Profil oder ein Profil aus einer Folge von Rechtecken auf. Auch bei der Ausbildung des Wickelkörpers als geschlitztes Blech sind die Metallbänder für die Drosselwicklungen in einer bevorzugten Ausführungsform gegeneinander elektrisch isoliert.

Die Drosselwicklungen des Wickelkörpers für die Drosseln an den Ausgängen der Wechselrichter, die derselben Phase zugeordnet sind, sind so gewickelt, dass der gemeinsame Anschluss der Drosselwicklungen innen am Kern liegt. Dann sind die außen liegenden Anschlüsse zum Anschließen der Drosselwicklungen an die Ausgänge der einzelnen Wechselrichter besonders leicht zugänglich; und auch der innen liegende gemeinsame Anschluss kann leicht kontaktiert werden, indem er axial, d. h. parallel zum Kern, herausgeführt wird.

Typischerweise sind die einzelnen Drosselwicklungen schneckenförmig um den gemeinsamen Kern gewickelt, so dass sie in parallel zueinander verlaufenden Ebenen angeordnet sind, die jeweils normal zu der Haupterstreckungsrichtung des Kerns ausgerichtet und untereinander beabstandet sind. Die Drosselwicklungen sind so räumlich getrennt und daher bis zu ihrem gemeinsamen Anschluss einfach gegeneinander zu isolieren.

Die magnetischen Kerne, auf denen die jeweils dem gleichen Phasenanschluss zugeordneten Drosseln gemeinsam angeordnet sind, können getrennt sein. In einer vorteilhaften Ausführungsform sind sie jedoch magnetisch gekoppelt. Beispielsweise können die magnetischen Kerne parallele Schenkel eines magnetischen Grundkörpers sein.

Die Umwandlung des von der Gleichstromquelle bereitgestellten Gleichstroms in einen Wechselstrom kann grundsätzlich auf beliebige Art erfolgen, und die Wechselrichter können dazu grundsätzlich beliebig ausgeführt sein. Beispielsweise kann die Stromformung des Wechselstroms auf einer Pulsweitenmodulation basieren. Eine Taktung der Wechselrichter kann dabei für jeden Wechselrichter unabhängig von den anderen erfolgen. In einer bevorzugten Ausführungsform der erfindungsgemäßen Vorrichtung sind die Wechselrichter, d. h. Schalter ihrer Wechselrichterbrücken, jedoch synchron getaktet, da so die zu drosselnden Querströme lediglich durch unterschiedliche Schaltcharakteristiken der Wechselrichter, aber nicht durch unterschiedliche Taktungen und daraus resultierende Taktphasenverschiebungen verursacht werden. Die anschließend noch zu drosselnden Querströme werden so effektiv begrenzt. Zu diesem Zweck kann die erfindungsgemäße Vorrichtung eine separate Steuereinrichtung aufweisen, die Schalter der Wechselrichterbrücken der Wechselrichter synchron ansteuert oder Steuerungen der einzelnen Wechselrichter synchronisiert.

Insbesondere kann die erfindungsgemäße Vorrichtung zum Einspeisen von elektrischem Strom von mindestens einer Gleichstromquelle in ein dreiphasiges Wechselstromnetz vorgesehen sein. Die Gleichstromquelle kann insbesondere ein Photovoltaikgenerator sein.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere der dargestellten relativen Anordnung mehrerer Bauteile zueinander sowie Wirkverbindungen - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Wenn hingegen nur die genaue Anzahl eines Merkmals angegeben werden soll, findet das Adjektiv "genau" vor dem jeweiligen Merkmal Verwendung. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: ist eine schematische Darstellung einer erfindungsgemäßen Vorrichtung, mit der elektrischer Strom von mindestens einer Gleichstromquelle über mehrere Wechselrichter in ein Wechselstromnetz einspeisbar ist.
- **Fig. 2**: zeigt abgewickelt einen einstückigen Wickelkörper, aus dem mehrere auf einem gemeinsamen Kern angeordnete Drosselwicklungen einer erfindungsgemäßen Vorrichtung gebildet sein können.
- **Fig. 3**: zeigt abgewickelt eine weitere Ausführungsform eines einstückigen Wickelkörpers, aus dem mehrere auf einem gemeinsamen Kern angeordnete Drosselwicklungen einer erfindungsgemäßen Vorrichtung gebildet sein können.
- **Fig. 4**: zeigt einen Schnitt durch den auf einen Kern aufgewickelten einstückigen Wickelkörper gemäß Fig. 3 mit Blickrichtung auf eine der von ihm gebildeten Drosselwicklungen.

### FIGURENBESCHREIBUNG

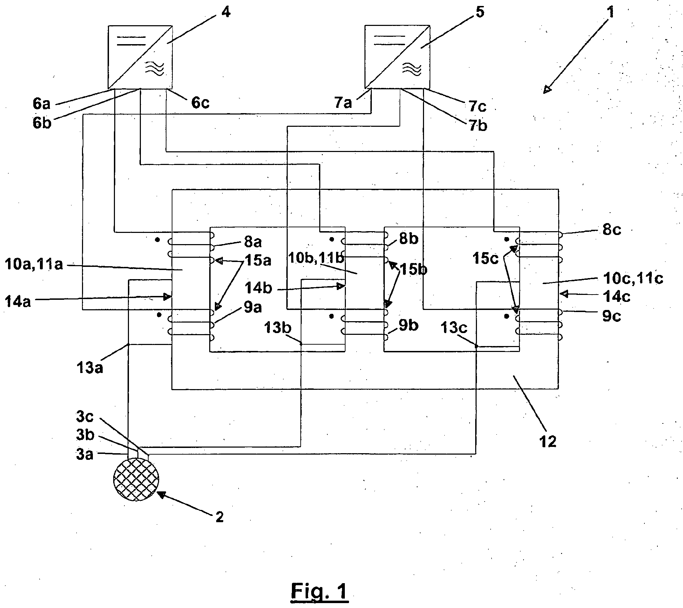

**Fig. 1** zeigt eine erfindungsgemäße Vorrichtung 1, mit der elektrischer Strom von mindestens einer hier nicht dargestellten Gleichstromquelle in ein Wechselstromnetz (2) einspeisbar ist. Dabei weist die Vorrichtung 1 für jede Phase des dreiphasigen Wechselstromnetz 2 einen Phasenanschluss 3a, 3b, 3c auf.

In der in Fig. 1 dargestellten Ausführungsform weist die erfindungsgemäße Vorrichtung 1 zwei elektrisch parallel geschaltete Wechselrichter 4, 5 auf, wobei jeder der Wechselrichter 4, 5 eingangsseitig an die Stromquelle(n) angeschlossen ist und für jede Phase des dreiphasigen Wechselstromnetzes 2 einen Ausgang 6a, 6b, 6c, 7a, 7b, 7c aufweist. Jeder Ausgang 6a-6c, 7a-7c ist über eine Drossel mit einer Drosselwicklung 8a-8c, 9a-9c mit einem der drei Phasenanschlüsse 3a-3c elektrisch leitend verbunden. Dabei sind die Drosselwicklungen 8a und 9a, 8b und 9b bzw. 8c und 9c, über die die Ausgängen 6a und 7a, 6b und 7b bzw. 6c und 7c mit jeweils demselben Phasenanschluss 3a, 3b bzw. 3c verbunden sind, jeweils als Wickelkörper 15a, 15b bzw. 15c auf einem gemeinsamen magnetischen Kern 10a, 10b bzw. 10c angeordnet.

Die magnetischen Kerne 10a, 10b und 10c sind in der in Fig. 1 dargestellten Ausführungsform Schenkel 11a, 11b, 11c eines zusammenhängenden magnetischen Grundkörpers, der dieselbe Form wie bei einem dreiphasigen Transformator 12 aufweist. Die drei Drosselwicklungen 8a und 9a; 8b und 9b bzw. 8c und 9c, die jeweils auf einem gemeinsamen magnetischen Kern 10a, 10b, 10c angeordnet sind, weisen jeweils einen gemeinsamen Anschluss 13a, 13b bzw. 13c auf, der mit einem der Phasenanschlüsse 3a, 3b, 3c elektrisch leitend verbunden ist. Die Drosselwicklungen 8a-8c, 9a-9c sind hierbei alle in derselben Richtung um ihren magnetischen Kern 10a-10c gewickelt.

Indem die Drosselwicklungen 8a und 9a, 8b und 9b bzw. 8c und 9c, die den Ausgängen 6a und 7a, 6b und 7b bzw. 6c und 7c zu jeweils demselben Phasenanschluss 3a, 3b bzw. 3c zugeordnet sind, jeweils auf einem gemeinsamen magnetischen Kern 10a-10c angeordnet sind, sind sie magnetisch gekoppelt. Durch diese Anordnung können zwischen den Ausgängen 6a-6c, 7a-7c auftretende Querströme, die beispielsweise aus einem ungleichen Schaltverhalten der Wechselrichter 4, 5 resultieren können, minimiert werden, sodass die Ausgänge 6a und 7a, 6b und 7b bzw. 6c und 7c der Wechselrichter 4, 5 entkoppelt sind.

Liegt beispielsweise der Ausgang 6a des Wechselrichters 4 aufgrund eines ungleichen Schaltverhaltens auf einem höheren Potential als der Ausgang 7a des Wechselrichters 5 für die gleiche Phase des Wechselstromnetzes 2, könnte dies zwar grundsätzlich zu einem Querstrom zwischen dem Ausgang 6a des Wechselrichters 4 und dem Ausgang 7a des Wechselrichters 5 führen. Da die zugehörigen Drosseln 8a, 9a aber auf dem gleichen magnetischen Kern 10a angeordnet sind, wirken einem solchen Querstrom sowohl die Induktivitäten der Drosseln 8a, 9a als auch die Gegeninduktivitäten der magnetisch gekoppelten Drosseln 8a, 9a entgegen. Die auf einen gemeinsamen magnetischen Kern 10a, 10b bzw. 10c gewickelten Drosseln 8a und 9a, 8b und 9b bzw. 8c und 9c wirken in der in Fig. 1 dargestellten Ausführung der erfindungsgemäßen Vorrichtung 1 gleichzeitig als Netzfilterdrosseln 14a, 14b, 14c der Phasenanschlüsse 3a, 3b, 3c. Durch diese Netzfilterdrosseln 14a-14c kann der an den Ausgängen 6a-6c, 7a-7c der Wechselrichter 4, 5 ausgegebene Strom gefiltert werden, um insbesondere einen von einer zur Stromformung in dem jeweiligen Wechselrichter eingesetzten Pulsweitenmodulation herführenden Schaltrippel zu unterdrücken.

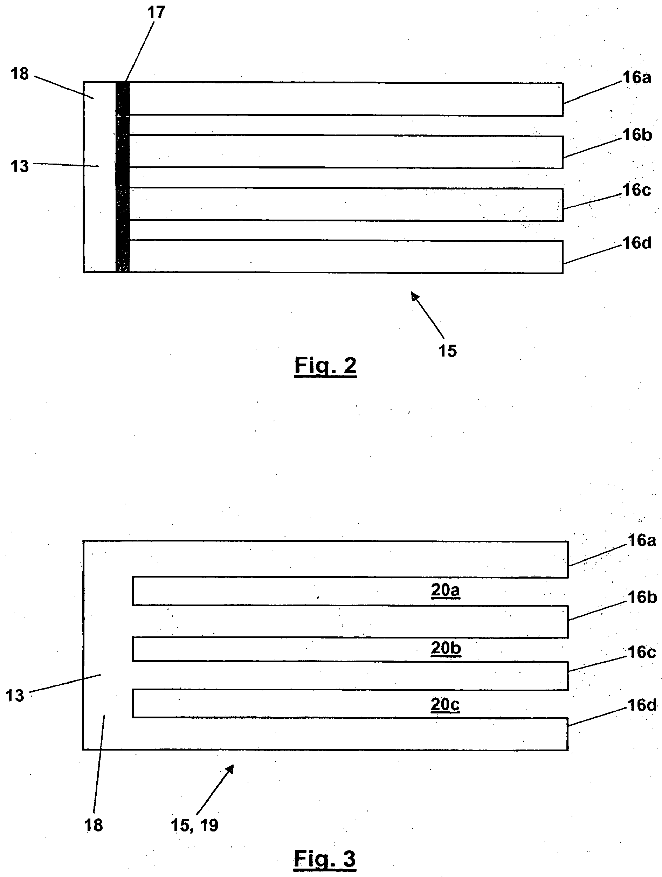

In **Fig. 2** ist ein abgewickelter Wickelkörper 15 dargestellt, aus dem die Drosselwicklungen der Drosseln einer erfindungsgemäßen Vorrichtung 1 gebildet werden können. In der in Fig. 2 dargestellten Ausführungsform des Wickelkörpers 15 ist dieser zur Ausbildung von vier Drosselwicklungen vorgesehen, d. h. für eine Parallelschaltung von vier Wechselrichtern. Dazu weist der Wickelkörper 15 vier Metallbänder 16a-16d auf, die zum Ausbilden der Drosselwicklungen für die Drosseln schneckenförmig aufgewickelt werden. Die voneinander beabstandeten und parallel zueinander verlaufenden Metallbänder 16a-16d sind über eine Verbindung 17 mit einem quer zu ihnen verlaufenden weiteren Metallband 18 elektrisch leitend verbunden, die den gemeinsamen Anschluss 13 für die aus den Metallbändern 16a-16d gebildeten Drosseln bildet und über die diese gemeinsam an einen Phasenanschluss 3 gemäß Fig. 1 angeschlossen sind.

Aus dem in Fig. 2 dargestellten Wickelkörper 15 werden die Drosselwicklungen 8, 9 für die Drosseln derart gebildet werden, dass die Metallbänder 16a-16d an dem Metallband 18 beginnend aufgewickelt werden, sodass das Metallband 18, das den gemeinsamen Anschluss 13 bildet, innen in dem Wickelkörper liegt. Dadurch ist ein Anschließen der Ausgänge der Wechselrichter an die einzelnen Drosselwicklungen in besonders einfacher Weise möglich. Das Aufwickeln kann derart geschehen, dass die Metallbänder 16a-16d auf einen magnetischen Kern gewickelt werden. Der Wickelkörper 15 kann aber auch erst nach dem Wickeln der Metallbänder 16a-16d zu Drosselwicklungen auf einen magnetischen Kern aufgeschoben werden.

Um die aus den Metallbändern 16a-16d gebildeten Drosselwicklungen gegeneinander elektrisch zu isolieren, können die Metallbänder 16a-16d mit einem elektrisch isolierenden Material beschichtet sein.

In Fig. 3 ist eine weitere Ausführungsform des Wickelkörpers 15 dargestellt, auch hier im abgewickelten Zustand. Dieser Wickelkörper 15 ist aus einem geschlitzten Blech 19 gebildet, wobei durch die in das Blech 19 gebrachten Schlitze 20a-20c die separaten, nebeneinander liegenden Metallbänder 16a-16d gebildet sind, die an einem Ende des Blechs 19 verbunden sind, indem die Schlitze 20a-20c nur bis kurz vor dieses Ende geführt sind, das so den gemeinsamen Anschluss 13 für die aus den Metallbändern 16a-16d gebildeten Drosselwicklungen bildet. Ansonsten entspricht die Ausführungsform des Wickelkörpers 15 gemäß Fig. 3, insbesondere in Hinblick auf die Möglichkeiten beim Ausbilden der Drosselwicklungen, derjenigen gemäß Fig. 2.

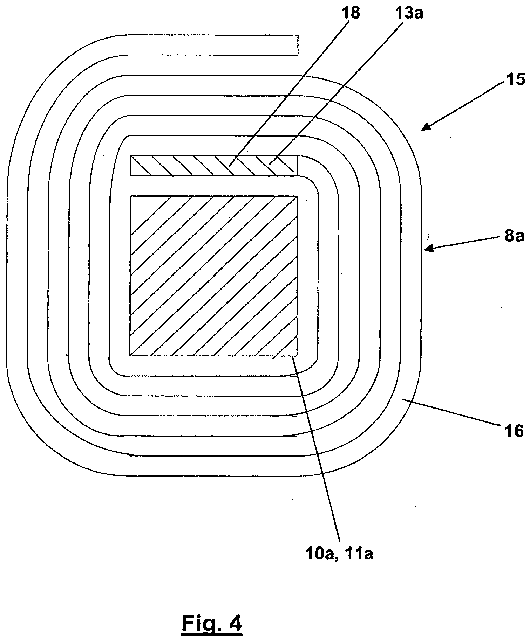

In **Fig. 4** ist ein aufgewickelter Wickelkörper 15 gezeigt, zu dem das geschlitzte Blech 19 mit den parallel zueinander verlaufenden Metallbändern 16a-16d gemäß Fig. 3 auf den magnetischen Kern 10 aufgewickelt ist, um eine erfindungsgemäße Drosseleinrichtung auszubilden. Die in dem Schnitt gemäß Fig. 4 in Draufsicht zu sehende Drosselwicklung 8a ist dabei schneckenförmig um den Kern 10 und den gemeinsamen, von dem Metallband 18 gebildeten Anschluss 13 herum gewickelt. Über den gemeinsamen innen liegenden Anschluss 13 ist die elektrische Kontaktierung der auf dem gemeinsamen Kern 10 angeordneten Drosselwicklungen an ihren innen liegenden Enden problemlos möglich. Ihre außen liegenden Enden sind sowieso unbehindert voneinander mit den Ausgängen der Wechselrichter, die jeweils dem gleichen Phasenanschluss zugeordnet sind, verbindbar.

### BEZUGSZEICHENLISTE

- 1: Vorrichtung
- 2: Wechselstromnetz
- 3: Phasenanschluss
- 4: Wechselrichter
- 5: Wechselrichter
- 6: Ausgang
- 7: Ausgang
- 8: Drosselwicklung
- 9: Drosselwicklung
- 10: Kern
- 11: Schenkel
- 12: Grundkörper
- 13: Anschluss
- 14: Filterdrossel
- 15: Wickelkörper
- 16: Metallband
- 17: Verbindung
- 18: Metallband
- 19: Blech
- 20: Schlitz

## Patentansprüche

1. Drosseleinrichtung mit mehreren ersten Drosselwicklungen (8a, 9a), die auf einem ersten gemeinsamen magnetischen Kern (10a) angeordnet und an einem Ende der ersten Drosselwicklungen (8a, 9a) parallel zueinander mit einem ersten gemeinsamen Anschluss (13a) elektrisch leitend verbunden sind, wobei die ersten Drosselwicklungen (8a, 9a) in derselben Richtung um den ersten gemeinsamen magnetischen Kern (10a) gewickelt sind,
**dadurch gekennzeichnet, dass** die ersten Drosselwicklungen (8a, 9a) durch einen auf dem ersten gemeinsamen magnetischen Kern (10a) angeordneten einstückigen Wickelkörper (15a) ausgebildet sind, der den ersten gemeinsamen Anschluss (13a) der ersten Drosselwicklungen (8a, 9a) umfasst, wobei die ersten Drosselwicklungen (8a, 9a) um ihren ersten gemeinsamen Anschluss (13a) und den ersten gemeinsamen magnetischen Kern (10a) gewickelt sind.

2. Drosseleinrichtung nach Anspruch 1, **dadurch gekennzeichnet, dass** mehrere zweite Drosselwicklungen (8b, 9b) vorgesehen sind, die auf einem zweiten gemeinsamen magnetischen Kern (10b) angeordnet und an einem Ende der zweiten Drosselwicklungen (8b, 9b) parallel zueinander mit einem zweiten gemeinsamen Anschluss (13b) elektrisch leitend verbunden sind, wobei die zweiten Drosselwicklungen (8b, 9b) in derselben Richtung um den zweiten gemeinsamen magnetischen Kern (10b) gewickelt sind, durch einen auf dem zweiten gemeinsamen magnetischen Kern (10b) angeordneten einstückigen Wickelkörper (15b) ausgebildet sind, der den zweiten gemeinsamen Anschluss (13b) der zweiten Drosselwicklungen (8b, 9b) umfasst, und wobei die zweiten Drosselwicklungen (8b, 9b) um ihren zweiten gemeinsamen Anschluss (13b) und den zweiten gemeinsamen magnetischen Kern (10b) gewickelt sind.

3. Drosseleinrichtung nach Anspruch 2, **dadurch gekennzeichnet, dass** mehrere dritte Drosselwicklungen (8c, 9c) vorgesehen sind, die auf einem dritten gemeinsamen magnetischen Kern (10c) angeordnet und an einem Ende der dritten Drosselwicklungen (8c, 9c) parallel zueinander mit einem dritten gemeinsamen Anschluss (13c) elektrisch leitend verbunden sind, wobei die dritten Drosselwicklungen (8c, 9c) in derselben Richtung um den dritten gemeinsamen magnetischen Kern (10c) gewickelt sind, durch einen auf dem dritten gemeinsamen magnetischen Kern (10c) angeordneten einstückigen Wickelkörper (15c) ausgebildet sind, der den dritten gemeinsamen Anschluss (13c) der dritten Drosselwicklungen (8c, 9c) umfasst, und wobei die dritten Drosselwicklungen (8c, 9c) um ihren dritten gemeinsamen Anschluss (13c) und den dritten gemeinsamen magnetischen Kern (10c) gewickelt sind.

4. Drosseleinrichtung nach Anspruch 2 oder 3, **dadurch gekennzeichnet, dass** mehrere magnetische Kerne (10a, 10b, 10c), auf denen jeweils mehrere Drosselwicklungen (8, 9), die an ihrem einem Ende mit einem gemeinsamen Anschluss (13) elektrisch leitend verbunden sind, gemeinsam angeordnet sind, magnetisch gekoppelt sind.

5. Drosseleinrichtung nach Anspruch 4, **dadurch gekennzeichnet, dass** die mehreren magnetischen Kerne (10a, 10b, 10c) parallele Schenkel (11a, 11b, 11c) eines gemeinsamen magnetischen Grundkörpers (12) sind.

6. Drosseleinrichtung nach einem der vorhergehenden Ansprüche, **dadurch gekennzeichnet, dass** jeder Wickelkörper (15) parallel zueinander verlaufende, die Drosselwicklungen (8, 9) ausbildende Metallbänder (16) und ein quer dazu verlaufendes, den gemeinsamen Anschluss (13) ausbildendes Metallband (18) aufweist.

7. Drosseleinrichtung nach Anspruch 6, **dadurch gekennzeichnet, dass** jeder Wickelkörper (15) als geschlitztes Blech (19) ausgebildet ist.

8. Drosseleinrichtung nach einem der vorhergehenden Ansprüche, **dadurch gekennzeichnet, dass** die Drosselwicklungen (8, 9) jeweils schneckenförmig um den magnetischen Kern (10) gewickelt sind.

9. Vorrichtung (1), mit der elektrischer Strom von mindestens einer Gleichstromquelle in ein Wechselstromnetz (2) einspeisbar ist,
- wobei die Vorrichtung eine Mehrzahl von elektrisch parallel geschalteten Wechselrichtern (4, 5) und für jede Phase des Wechselstromnetzes (2) einen Phasenanschluss (3) aufweist und
- wobei jeder der Wechselrichter (4, 5) für jede Phase des Wechselstromnetzes (2) einen Ausgang (6, 7) aufweist, der über eine eine Drosselwicklung (8, 9) aufweisende Drossel mit dem Phasenanschluss (3) für dieselbe Phase elektrisch leitend verbunden ist,
- wobei alle Drosselwicklungen (8, 9) der Drosseln, über die die Ausgänge (6, 7) der Wechselrichter (4, 5) für dieselbe Phase mit dem Phasenanschluss (3) für diese Phase verbunden sind, Drosselwicklungen (8, 9) einer Drosseleinrichtung nach einem der vorhergehenden Ansprüche sind, die auf einem gemeinsamen magnetischen Kern (10) angeordnet und an ihrem einem Ende mit einem gemeinsamen Anschluss (13) elektrisch leitend verbunden sind.

10. Vorrichtung (1) nach Anspruch 9, **dadurch gekennzeichnet, dass** die auf dem gemeinsamen magnetischen Kern (10) angeordneten Drosselwicklungen (8, 9) der Drosseln, über die die Ausgänge (6, 7) der Wechselrichter (4, 5) für dieselbe Phase mit dem Phasenanschluss (3) für diese Phase verbunden sind, eine Netzfilterdrossel (14) für den Phasenanschluss (3) für diese Phase bilden.

11. Vorrichtung (1) nach Anspruch 9 oder 10, **dadurch gekennzeichnet, dass** das Wechselstromnetz (2) drei Phasen aufweist.

12. Vorrichtung (1) nach einem der Ansprüche 9 bis 11, **dadurch gekennzeichnet, dass** die Wechselrichter (4, 5) synchron getaktet sind.

## Claims

1. An inductor device comprising a plurality of first inductor windings (8a, 9a), which are arranged on a first common magnetic core (10a) and are electrically conductively connected, parallel to one another, to a first common connection (13a) at one end of the first inductor windings (8a, 9a), wherein the first inductor windings (8a, 9a) are wound around the a first common magnetic core (10a) in the same direction,
**characterized in that** the first inductor windings (8a, 9a) are formed by an integral coil body (15a) arranged on the first common magnetic core (10a), which coil body comprises the first common connection (13a) of the first inductor windings (8a, 9a), wherein the first inductor windings (8a, 9a) are wound around their first common connection (13a) and the first common magnetic core (10a).

2. The inductor device as claimed in claim 1, **characterized in that** a plurality of second inductor windings (8b, 9b) are provided, which are arranged on a second common magnetic core (10b) and are electrically conductively connected, parallel to one another, to a second common connection (13b) at one end of the second inductor windings (8b, 9b), wherein the second inductor windings (8b, 9b) are wound around the a second common magnetic core (10b) in the same direction and the second inductor windings (8b, 9b) are formed by an integral coil body (15b) arranged on the second common magnetic core (10b), which coil body comprises the second common connection (13b) of the second inductor windings (8b, 9b), and wherein the second inductor windings (8b, 9b) are wound around their second common connection (13b) and the second common magnetic core (10b).

3. The inductor device as claimed in claim 2, **characterized in that** a plurality of third inductor windings (8c, 9c) are provided, which are arranged on a third common magnetic core (10c) and are electrically conductively connected, parallel to one another, to a third common connection (13c) at one end of the third inductor windings (8c, 9c), wherein the third inductor windings (8c, 9c) are wound around the a third common magnetic core (10c) in the same direction and the third inductor windings (8c, 9c) are formed by an integral coil body (15c) arranged on the third common magnetic core (10c), which coil body comprises the third common connection (13c) of the third inductor windings (8c, 9c), and wherein the third inductor windings (8c, 9c) are wound around their third common connection (13c) and the third common magnetic core (10c).

4. The inductor device as claimed in claim 2 or 3, **characterized in that** a plurality of magnetic cores (10a, 10b, 10c) are magnetically coupled, each magnetic core comprising a plurality of inductor windings (8, 9), which are electrically conductively connected to a common connection (13) at one of their ends, being arranged thereon.

5. The inductor device as claimed in claim 4, **characterized in that** the plurality of magnetic cores (10a, 10b, 10c) are parallel limbs (11a, 11b, 11c) of a common magnetic basic body (12).

6. The inductor device as claimed in one of the preceding claims, **characterized in that** each coil body (15) has metal strips (16) which run parallel to one another and which form the inductor windings (8, 9) and a metal strip (18) which runs transversely to said parallel metal strips and forms the common connection (13).

7. The inductor device as claimed in claim 6, **characterized in that** each coil body (15) is formed by a slotted metal sheet (19).

8. The inductor device as claimed in one of the preceding claims, **characterized in that** each of the inductor windings (8, 9) are wound in the form of a spiral around the magnetic core (10).

9. An apparatus (1) with which electric current can be fed from at least one DC source into an AC grid (2),
- wherein the apparatus comprises a plurality of inverters (4, 5) connected electrically in parallel and one phase connection (3) for each phase of the AC grid (2), and
- wherein each of the inverters (4, 5) has an output (6, 7) for each phase of the AC grid (2), which output is electrically conductively connected to the phase connection (3) for the same phase via an inductor having an inductor winding (8, 9),
- wherein all of the inductor windings (8, 9) of the inductors via which the outputs (6, 7) of the inverters (4, 5) for the same phase are connected to the phase connection (3) for this phase are inductor windings (8, 9) of an inductor device as claimed in one of the preceding claims, which inductor windings are arranged on a common magnetic core (10) and are electrically conductively connected at one of their ends to a common connection (13).

10. The apparatus (1) as claimed in claim 9, **characterized in that** the inductor windings (8, 9), which are arranged on the common magnetic core (10), of the inductors via which the outputs (6, 7) of the inverters (4, 5) for the same phase are connected to the phase connection (3) for this phase form a line filter inductor (14) for the phase connection (3) for this phase.

11. The apparatus (1) as claimed in claim 9 or 10, **characterized in that** the AC grid (2) comprises three phases.

12. The apparatus (1) as claimed in one of claims 9 to 11, **characterized in that** the inverters (4, 5) are clocked synchronously.

## Revendications

1. Dispositif d'inductance avec plusieurs premiers enroulements d'inductance (8a, 9a) qui sont placés sur un premier noyau (10a) magnétique commun et qui sur une extrémité des premiers enroulements d'inductance (8a, 9a) sont connectés en parallèle les uns des autres en conduisant l'électricité avec un premier raccordement (13a) commun, les premiers enroulements d'inductance (8a, 9a) étant enroulés dans la même direction autour du premier noyau magnétique (10a) commun,
**caractérisé en ce que** les premiers enroulements d'inductance (8a, 9a) sont formés par un premier corps d'enroulement (15a) monobloc placé sur le premier noyau (10a) magnétique commun qui comprend le premier raccordement (13a) commun des premiers enroulements d'inductance (8a, 9a), les premiers enroulements d'inductance (8a, 9a) étant enroulés autour de leur premier raccordement (13a) commun et du premier noyau (10a) magnétique commun.

2. Dispositif d'inductance selon la revendication 1, **caractérisé en ce que** plusieurs deuxièmes enroulements d'inductance (8b, 9b) sont prévus qui sont placés sur un deuxième noyau (10b) magnétique commun et qui sur une extrémité des deuxièmes enroulements d'inductance (8b, 9b) sont connectés en parallèle les uns des autres en conduisant l'électricité avec un deuxième raccordement (13b) commun, les deuxièmes enroulements d'inductance (8b, 9b) étant enroulés dans la même direction autour du deuxième noyau (10b) magnétique commun, étant formés par un corps d'enroulement (15b) en monobloc placé sur le deuxième noyau (10b) magnétique commun, qui comprend le deuxième raccordement (13b) commun des deuxièmes enroulements d'inductance (8b, 9b) et les deuxièmes enroulements d'inductance (8b, 9b) étant enroulés autour de leur deuxième raccordement (13b) commun et du deuxième noyau (10b) magnétique commun.

3. Dispositif d'inductance selon la revendication 2, **caractérisé en ce que** plusieurs troisièmes enroulements d'inductance (8c, 9c) sont prévus qui sont placés sur un troisième noyau (10c) magnétique commun et qui sur une extrémité des troisièmes enroulements d'inductance (8c, 9c) sont connectés en parallèle les uns des autres en conduisant l'électricité avec un troisième raccordement (13c) commun, les troisièmes enroulements d'inductance (8c, 9c) étant enroulés dans la même direction autour du troisième noyau (10c) magnétique commun, étant formés par un corps d'enroulement (15c) en monobloc placé sur le troisième noyau (10c) magnétique commun, qui comprend le troisième raccordement (13c) commun des troisièmes enroulements d'inductance (8c, 9c) et les troisièmes enroulements d'inductance (8c, 9c) étant enroulés autour de leur troisième raccordement (13c) commun et du troisième noyau (10c) magnétique commun.

4. Dispositif d'inductance selon la revendication 2 ou la revendication 3, **caractérisé en ce que** plusieurs noyaux (10a, 10b, 10c) magnétiques sur lesquels chaque fois plusieurs enroulements d'inductance (8, 9) qui sur l'une de leurs extrémités sont reliés avec un raccordement (13) commun en conduisant l'électricité, sont placés en commun, sont couplés magnétiquement.

5. Dispositif d'inductance selon la revendication 4, **caractérisé en ce que** les plusieurs noyaux magnétiques (10a, 10b, 10c) sont des branches parallèles (11a, 11b, 11c) d'un corps de base (12) magnétique commun.

6. Dispositif d'inductance selon l'une quelconque des revendications précédentes, **caractérisé en ce que** chaque corps d'enroulement (15) comporte plusieurs bandes métalliques (16) s'étendant à la parallèle les unes des autres, formant les enroulements d'inductance (8, 9) et une bande métallique (18) s'étendant à la transversale de ces dernières, formant le raccordement (13) commun.

7. Dispositif d'inductance selon la revendication 6, **caractérisé en ce que** chaque corps d'enroulement (15) est conçu en tant que tôle (19) fendue.

8. Dispositif d'inductance selon l'une quelconque des revendications précédentes, **caractérisé en ce que** les enroulements d'inductance (8, 9) sont enroulés chacun en forme d'escargot autour du noyau (10) magnétique.

9. Installation (1) à l'aide de laquelle du courant électrique peut être alimenté à partir d'au moins une source de courant continu dans un réseau de courant alternatif (2),
- l'installation comprenant une pluralité d'onduleurs (4, 5) électriquement montés en parallèle et comportant un raccordement de phase (3) pour chaque phase du réseau de courant alternatif (2) et
- chacun des onduleurs (4, 5) comportant pour chaque phase du réseau de courant alternatif (2) une sortie (6, 7) qui par l'intermédiaire d'une bobine de choc comportant un enroulement d'inductance (8, 9) est reliée en conduisant l'électricité avec le raccordement de phase (3) pour la même phase,
- tous les enroulements d'inductance (8, 9) des bobines de choc par l'intermédiaire desquels les sorties (6, 7) des onduleurs (4, 5) pour la même phase sont reliées avec le raccordement de phase (3) pour ladite phase étant des enroulements d'inductance (8, 9) d'un dispositif d'inductance selon l'une quelconque des revendications précédentes, qui sont placés sur un noyau (10) magnétique commun et sur une de leurs extrémités sont reliés en conduisant l'électricité avec un raccordement (13) commun.

10. Installation (1) selon la revendication 9, **caractérisée en ce que** les enroulements d'inductance (8, 9) des bobines de choc placés sur le noyau (10) magnétique commun par l'intermédiaire desquels les sorties (6, 7) des onduleurs (4, 5) pour la même phase sont reliées avec le raccordement de phase (3) de ladite phase forment une inductance de filtrage (14) pour le raccordement de phase (3) de ladite phase.

11. Installation (1) selon la revendication 9 ou la revendication 10, **caractérisée en ce que** le réseau de courant alternatif (2) comporte trois phases.

12. Installation (1) selon l'une quelconque des revendications 9 à 11, **caractérisée en ce que** les onduleurs (4, 5) sont à cadencement synchrone.
